(19) Europäisches Patentamt
European Patent Office
Office européen des brevets

(11) EP 2 239 915 B1

(12) **EUROPEAN PATENT SPECIFICATION**

| | |
|---|---|
| (45) Date of publication and mention of the grant of the patent: **17.09.2014 Bulletin 2014/38** | (51) Int Cl.: **H04L 27/38** *(2006.01)* |

(21) Application number: **10157997.7**

(22) Date of filing: **26.03.2010**

(54) **Method and associated apparatus for demolutating quadrature amplitude modulated (QAM) digital signals**

Verfahren und dazugehörige Vorrichtung zur Demodulierung von quadraturamplitudenmodulierten (QAM-)Digitalsignalen

Procédé et dispositif correspondant pour démoduler des signaux digitals modulés en amplitude en quadrature (MAQ)

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **10.04.2009 IT MI20090600**

(43) Date of publication of application:
**13.10.2010 Bulletin 2010/41**

(73) Proprietor: **SIAE Microelettronica S.p.A.**
**20093 Cologno Monzese (MI) (IT)**

(72) Inventor: **Salvaneschi, Cesare**
**20093, Cologno Monzese (IT)**

(74) Representative: **Raimondi, Margherita et al**
**Dott. Ing. Prof. Alfredo Raimondi S.r.l.,**
**Piazzale le Cadorna, 15**
**20123 Milano (IT)**

(56) References cited:
**US-A- 5 638 401     US-A1- 2007 030 916**

**Description**

The present invention relates to a method and an associated apparatus for demodulating signals transmitted and received in quadrature amplitude modulation (QAM) in digital radio-relay links.

It is known in the technical sector relating to digital radio relays that, in order to be able to receive signals transmitted in phase quadrature amplitude modulation (QAM), it is required to have demodulation devices which comprise a QAM demodulator for each digital modulating data flow D transmitted and each modulated flow received. Said QAM demodulator regenerates at its output the two components, I and Q of the original source flow D which, during transmission, the corresponding QAM modulator used for quadrature modulation of a carrier $f_c$, generating the radio signal S, such that S = I cos $\omega_c$t - Q sin $\omega_c$t.

According to the prior art, reception is performed by means of quadrature demodulation, i.e. multiplying the signal received by a carrier suitably reconstructed so as to be instantaneously in phase with that used during modulation, so that the said two transmitted components, I and Q, are obtained and are then sent to a base-band module which, operating in a conventional manner, regenerates at its output a digital flow D identical to the source flow transmitted.

According to the prior art, if, during radio-relay reception, two separate signals S1 and S2 QAM modulated with respective adjacent spectra are received, each of these having an associated data source flow, D1 or D2, it is required to use a separate QAM demodulator in order to demodulate each of the two signals S1,S2 and reconstruct the two digital source flows D1 and D2.

Examples of the prior art being disclosed into US/2007/030916 and US 5,638,401 the latter disclosing a method and an apparatus to modulate and transmit a signal composed of two QAM signals with a single modulator/transmitter and suggesting to use conventional techniques that require multiple receivers/demodulators, specifically one for each of said two QAM signals, to separate the two QAM signals from said transmitted signal at the receiving end.

In view of the growing need for digital signal transmission, it is however increasingly required to optimize the reception/transmission systems, with simpler circuits, greater reliability and reduced costs.

In connection with this problem it is also required that the reception system should be designed with a small number of components, be easy and inexpensive to produce and assemble and be able to be mounted easily on the antennae of the radio relays using normal standardized means.

These results are achieved according to the present invention by a processing method according to Claim 1 and a demodulation apparatus according to Claim 10.

Further details may be obtained from the following description of a non-limiting example of embodiment of the subject of the present invention provided with reference to the accompanying drawings in which:

Figure 1    is a schematic representation of the spectra of two QAM radio signals during reception;
Figure 2    is a block diagram representing a system for radio-relay reception with a demodulation apparatus according to the present invention comprising an analog QAM demodulator;
Figure 3    is a block diagram representing a system for radio-relay reception with a demodulation apparatus according to the present invention comprising a digital QAM demodulator;
Figure 4    is a block diagram of a digital processing circuit according to the present invention.

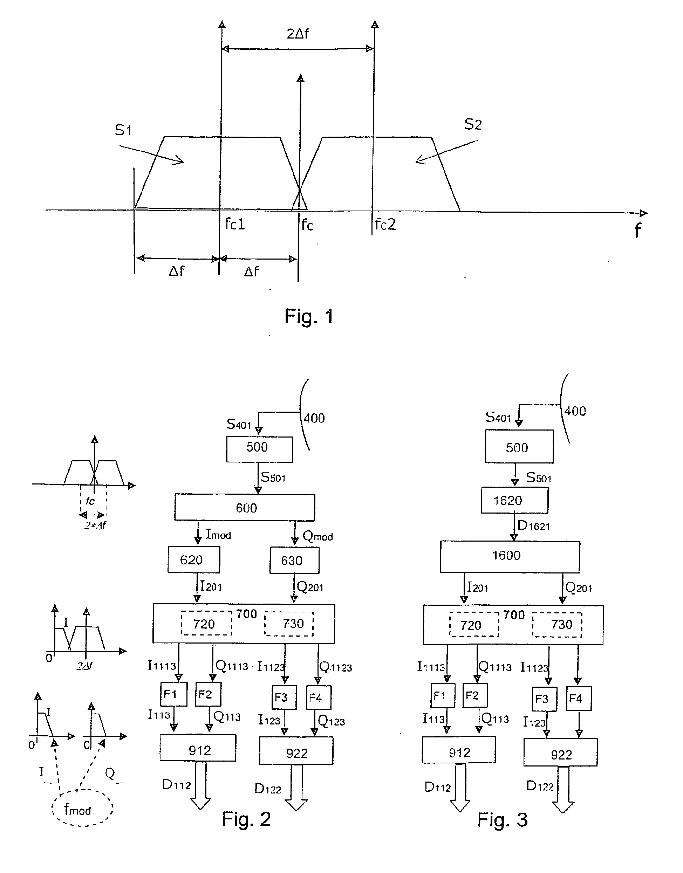

Figure 1 schematically shows the frequency spectrum of the signals which are received by the radio relay; as can be seen, the two signals S1 and S2 are each modulated by quadrature amplitude modulation (QAM) and each of the two signals S1,S2 occupies a working band equal to 2Δf centred on the respective carrier which is modulated (suppressed) at a frequency $f_{c1}$ and $f_{c2}$, respectively. 2Δf is also the channel spacing or the distance between the frequencies $f_{c1},f_{c2}$, of the two modulated carriers and therefore if fc indicates the intermediate frequency between the two spectra, fc1 = (fc - Δf) and fc2 = (fc + Δf).

With reference to Fig. 2 (receiver with analog QAM demodulator) which also briefly shows on the spectrum analyser the outputs of the various blocks, a first embodiment of a reception system according to the present invention comprises an antenna 400 receiving a radio signal $S_{401}$, which, as stated above, is composed of two spectra S1, S2, each of which is a quadrature amplitude modulated (QAM) signal of a respective carrier $f_{c1}, f_{c2}$, modulated by a respective pair of components $I_{113}, Q_{113}$ and $I_{123}, Q_{123}$, each relating to a respective source digital flow $D_{112}, D_{122}$.

Consequently, considering $S_{401}$, composed of the sum of the two spectra $S_1$ and $S_2$, as the overall signal, it can be represented as follows:

$$S_{401}(t) = I_{113} \cos (\omega_c - \Delta\omega)t - Q_{113} \sin (\omega_c - \Delta\omega)t + I_{123} \cos (\omega_c + \Delta\omega)t - Q_{123} \sin (\omega_c + \Delta\omega)t$$

where $\omega_c = 2\pi f_c$, $\Delta\omega = 2\pi\Delta f$, $\omega_{c1} = 2\pi f_{c1}$ and $\omega_{c2} = 2\pi f_{c2}$.

Said signal $S_{401}$ can also be represented as a single quadrature amplitude modulated (QAM) signal such that the following equation is valid

$$S_{401} = I_c \cos \omega ct - Q_c \sin \omega ct$$

where $I_c$, $Q_c$ represent a pair of components which quadrature modulate a frequency suppressed carrier $f_c$, which is central with respect to the overall band transmitted.

In order for the two equations to be equally valid, it is necessary for

$$I_c = (I_{113} + I_{123}) \cos \Delta\omega t + (Q_{113} - Q_{123}) \sin \Delta\omega t$$

$$Q_c = (Q_{113} + Q_{123}) \cos \Delta\omega t + (I_{123} - I_{113}) \sin \Delta\omega t$$

Said modulated sum signal $S_{401}$, which therefore contains the data relating to two modulating source digital flows, $D_{112}$ and $D_{122}$, is sent to the input of a conventional radio receiver 500 which generates at its output a signal $S_{501}$. Said signal $S_{501}$ is sent in turn to the input of a QAM demodulator 600 which is centred on the frequency fc; therefore, said demodulator operates as though the received signal were obtained by the modulation of a (suppressed) carrier with a frequency fc, generating at its output two quadrature components $I_c$ and $Q_c$.

Said two components are converted into digital form by a respective A/D converter, 620 and 630, which generates at its output a digital component, $I_{201}$ and $Q_{201}$, respectively, which has the spectrum contents of $I_c$ and $Q_c$, respectively, with in addition the response due to digitalization.

As regards that described above, the two signals $I_{201}$ and $Q_{201}$ may be represented as follows:

$$I_{201} = (I_{113} + I_{123}) \cos \Delta\omega t + (Q_{113} - Q_{123}) \sin \Delta\omega t$$

$$Q_{201} = (Q_{113} + Q_{123}) \cos \Delta\omega t + (I_{123} - I_{113}) \sin \Delta\omega t$$

where each digital pair $I_{113}/Q_{113}$ and $I_{123}/Q_{123}$ represents the components of a respective source digital flow $D_{112}$ and $D_{122}$ which during transmission has modulated the respective carrier $f_{c1}$ and $f_{c2}$.

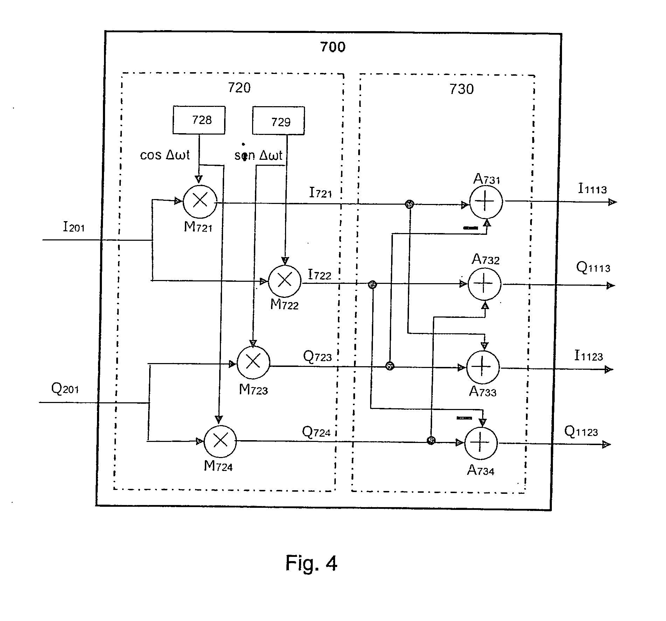

The pair of digital components, $I_{201}$, $Q_{201}$, is sent to the input of a processing circuit 700 according to the invention which, as shown in Fig. 4, comprises a multiplier module 720, comprising four multipliers $M_{721}, M_{722}, M_{723}, M_{724}$, and an adder module 730, comprising four adders $A_{731}, A_{732}, A_{733}, A_{734}$, cascade connected to the multiplier module.

In greater detail:

- the signal $I_{201}$ is sent to the input of the first multiplier $M_{721}$ and is multiplied by a factor $\cos \Delta\omega t$, generating a signal $I_{721} = I_{201}\cos\Delta\omega t$;
- the same signal $I_{201}$ is sent to the input of the second multiplier $M_{722}$ and is multiplied by a factor $\sin \Delta\omega t$, generating a signal $I_{722} = I_{201}\sin\Delta\omega t$;
- the signal $Q_{201}$ is sent to the input of the third multiplier $M_{723}$ and is multiplied by a factor $\sin \Delta\omega t$, generating a signal $Q_{723} = Q_{201}\sin\Delta\omega t$;
- the signal $Q_{201}$ is sent to the input of the fourth multiplier $M_{724}$ and is multiplied by a factor $\cos \Delta\omega t$, generating a signal $Q_{724} = Q_{201}\cos\Delta\omega t$.

The multiplication factors, $\cos \Delta\omega t$ and $\sin \Delta\omega t$, are contained in a respective static memory 728 and 729 of the same processing module 720 and are respectively the samples of a cosinusoid and pulsation sinusoid $\Delta\omega$.

The characteristics of said multiplication factors are a detail which the person skilled in the art is able to organize; here reference is made merely to the fact that their number is determined on the basis of the symbol frequency $f_{simb}$ of each signal transmitted, it being pointed out that the band of a signal with a symbol frequency $f_{simb}$ is limited to a modulating frequency $f_{mod} = (f_{simb}/2)*(1+\text{rolloff})$, where the rolloff parameter defines the filtering characteristics.

The said four product signals $I_{721}$, $I_{722}$, $Q_{723}$, $Q_{724}$, output by the respective multipliers, are sent in pairs to four adders of the following module 730. In particular:

- ) the signals $I_{721}$ and $Q_{723}$ are sent to the input of a first adder $A_{731}$ which calculates the difference between the first and second signal, generating at its output, in connection with the above, a signal $I_{1113} = I_{113} - Q_{123} \sin 2\Delta\omega t + I_{123} \cos 2\Delta\omega t$;
- ) the signals $I_{722}$ and $Q_{724}$ are sent to the input of a second adder $A_{732}$ which calculates the sum of the first and second signal, generating at its output a signal

$$Q_{1113} = Q_{113} - I_{123} \sin 2\Delta\omega t + Q_{123} \cos 2\Delta\omega t;$$

- ) the signals $I_{721}$ and $Q_{723}$ are sent to the input of a third adder $A_{733}$ which calculates the sum of the first and second signal, generating at its output a signal which can be represented by $I_{1123} = I_{123} - Q_{113} \sin 2\Delta\omega t + I_{113} \cos 2\Delta\omega t$;
- ) the signals $Q_{724}$ and $I_{722}$ are sent to the input of a fourth adder $A_{734}$ which calculates the difference between the first and second signal, generating at its output a signal which can be represented by:

$$Q_{1123} = Q_{123} - I_{113} \sin 2\Delta\omega t + Q_{113} \cos 2\Delta\omega t;$$

The four signals, $I_{1113}$, $Q_{1113}$, $I_{1123}$, $Q_{1123}$, output by the respective adder $A_{731}$, $A_{732}$, $A_{733}$, $A_{734}$ of the module 730, also constitute the output of the processing circuit 700.

It is pointed out that each of the four signals, $I_{1113}$, $Q_{1113}$, $I_{1123}$, $Q_{1123}$, output by the processing circuit 700, is composed of the sum of three signals to be added: the first signal to be added represents a base-band signal, the second and third signal to be added represent two signals displaced to a higher frequency of $2\Delta\omega t$.

With reference to Fig. 2, each signal ($I_{1113}$, $Q_{1113}$, $I_{1123}$, $Q_{1123}$) output by the processing circuit is input to a respective passband filter F1,F2,F3,F4, which cuts off the components at a higher frequency of each signal; a respective low-frequency component $I_{113}$, $Q_{113}$, $I_{123}$, $Q_{123}$ is therefore generated at the output by each filter such that $I_{113}/Q_{113}$ constitute the pair of quadrature modulating digital components corresponding to the first source digital flow $D_{112}$, and $I_{123}/Q_{123}$ constitute the pair of quadrature modulating digital components corresponding to the second source digital flow $D_{122}$.

Each pair of digital signals $I_{113}/Q_{113}$, $I_{123}/Q_{123}$ is sent to a respective reception base-band module 912,922 which, carrying out the reverse operation with respect to that performed by the corresponding base-band module during transmission, recombines the respective pair of input signals $I_{113}/Q_{113}$, $I_{123}/Q_{123}$ and serializes the bits, reconstructing in this way the source digital flows $D_{112}$, $D_{122}$.

As illustrated in Figure 3, a second embodiment of the apparatus according to the present invention comprises a digital QAM demodulator 1600. In this case the signal $S_{501}$ output by the radio receiver 500 is input into an A/D converter 1620 which generates a digital output $D_{1621}$; said digital output $D_{1621}$ is sent to the input of a digital QAM demodulator 1600 which generates at its output two digital components $I_{201}$ and $Q_{201}$ which are identical to those obtained with analog demodulation ($I_c$, $Q_c$) described above, but output by the two A/D converters 620 and 630 according to Figure 2.

The subsequent processing method and the associated processing circuit 700, which when processing the two signals, $I_{201}$ e $Q_{201}$, regenerate the two component pairs $I_{113}/Q_{113}$, $I_{123}/Q_{123}$ from which the two flows of digital source signals $D_{112}$ e $D_{122}$ are obtained, are the same as those described for analog demodulation according to Figs. 1 and 3 and are therefore not repeated.

The present invention relates furthermore to a method for demodulation of two radio signals S1 and S2 which are quadrature amplitude modulated in the manner described above in order to regenerate the associated pairs of components $I_{113}/Q_{113}$, $I_{123}/Q_{123}$ of a pair of modulating signals $D_{112}$, $D_{122}$.

The method for reception, demodulation and digital processing of the signal received, according to the present invention comprises the following steps:

A) simultaneous acquisition via an antenna 400 of:

a first radio signal

$$S1(t) = I_{113} \cos (\omega_{c1})t - Q_{113} \sin (\omega_{c1})t$$

which is quadrature amplitude modulated (QAM) by the components ($I_{113}$, $Q_{113}$) of a first digital source ($D_{112}$) and with a band spectrum $2\Delta f$ centred on an associated carrier $f_{c1}$ and
a second radio signal

$$S2(t) = I_{123} \cos (\omega_{c2})t - Q_{123} \sin (\omega_{c2})t$$

which is quadrature amplitude modulated by the components ($I_{123}$, $Q_{123}$) of a second digital source ($D_{122}$), with a band spectrum $2\Delta f$ centred on an associated carrier $f_{c2}$
the channel spacing of the two signals being equal to $2\Delta f$

- defining a sum signal ($S_{501}$) for the said modulated signals (S1a, S2a), which is in turn quadrature amplitude modulated (QAM) and centred on a frequency suppressed carrier ($f_c$)

$$fc = (fc2 + fc1)/2 = fc_1 + \Delta f = fc2 - \Delta f;$$

which is central with respect to the two modulated signals (S1a, S2a)

B) sending the sum signal $S_{401}$ received to the input of a conventional radio receiver 500 which generates at its output a signal $S_{501}$ which may be at a radio frequency fc or at an intermediate frequency fi;
C) sending the said signal $S_{501}$ output by the receiver to the input of an analog QAM demodulator 600 which demodulates on said central carrier frequency $f_c$ of the reception band; at the output of the said demodulator a first signal component $I_c$ and a second signal component $Q_c$ are generated;
D) sending the first component $I_c$ to the input of an A/D converter 620, which generates at its output a digital component $I_{201}$. Since $I_{201}$ has been generated by means of a process involving QAM demodulation of a signal $S_{401}$ which, as seen above, is formed by two signals which are quadrature amplitude modulated, said component $I_{201}$ is formed as follows:

$$I_{201} = (I_{113} + I_{123}) \cos \Delta \omega t + (Q_{113} - Q_{123}) \sin \Delta \omega t$$

where $I_{113}$, $Q_{113}$ and $I_{123}$, $Q_{123}$ are the quadrature modulating components of the two respective source flows $D_{112}$, $D_{122}$.
E) sending the second component Qc to the input of an A/D converter 630, which generates at its output a digital component $Q_{201}$. Since $Q_{201}$ has been generated by means of a process involving QAM demodulation of a signal $S_{401}$ which, as seen above, is formed by two signals which are quadrature amplitude modulated, said component $I_{201}$ is formed as follows:

$$Q_{201} = (Q_{113} + Q_{123}) \cos \Delta \omega t + (I_{123} - I_{113}) \sin \Delta \omega t$$

where $I_{113}$, $Q_{113}$ and $I_{123}$, $Q_{123}$ are the quadrature modulating components of two respective source flows $D_{112}$, $D_{122}$;
F) sending the pair of digital components $I_{201}$, $Q_{201}$ output by the respective A/D converters A/D 620,630 to the input of a processing circuit, 700, which regenerates at its output four signals $I_{1113}$, $I_{1123}$, $Q_{1113}$, $Q_{1123}$ each comprising a respective low-frequency component, $I_{113}$, $I_{123}$, $Q_{113}$, $Q_{123}$, such that $I_{113}$, $Q_{113}$ correspond to the quadrature components of the source flow $D_{112}$, and $I_{123}$, $Q_{123}$ correspond to the quadrature components of the source flow $D_{122}$.

In particular:

G) sending the component $I_{201}$ to a first multiplier $M_{721}$ and multiplying it by a factor $\cos \Delta\omega t$, generating a first product signal $I_{721} = I_{201} \cos \Delta\omega t$;

H) sending the component $I_{201}$ to a second multiplier $M_{722}$ and multiplying it by a factor $\sin \Delta\omega t$, generating a second product signal $I_{722} = I_{201} \sin \Delta\omega t$;

I) sending the component $Q_{201}$ to a third multiplier $M_{723}$ and multiplying it by a factor $\sin \Delta\omega t$, generating a third product signal $Q_{723} = Q_{201} \sin \Delta\omega t$;

J) sending the component $Q_{201}$ to a fourth multiplier $M_{724}$ and multiplying it by a factor $\cos \Delta\omega t$, generating a fourth product signal $Q_{724} = Q_{201} \cos \Delta\omega t$;

K) sending the first product signal $I_{721}$ and third product signal $Q_{723}$ to the input of a first adder $A_{731}$ which generates a first difference signal

$$I_{1113} = I_{113} - Q_{123} \sin 2\Delta\omega t + I_{123} \cos 2\Delta\omega t;$$

L) sending the second product signal $I_{722}$ and fourth product signal $Q_{724}$ to the input of a second adder $A_{722}$ which generates a first sum signal

$$Q_{1113} = Q_{113} + I_{123} \sin 2\Delta\omega t + Q_{123} \cos 2\Delta\omega t;$$

M) sending the first product signal $I_{721}$ and third product signal $Q_{723}$ to the input of a third adder $A_{733}$ which generates a second sum signal

$$I_{1123} = I_{123} + Q_{113} \sin 2\Delta\omega t + I_{113} \cos 2\Delta\omega t;$$

N) sending the fourth product signal $Q_{724}$ and second product signal $I_{722}$ to the input of a fourth adder $A_{734}$ which generates a second difference signal

$$Q_{1123} = Q_{123} - I_{113} \sin 2\Delta\omega t + Q_{113} \cos 2\Delta\omega t;$$

O) sending each of the four signals $I_{1113}$, $Q_{1113}$, $I_{1123}$, $Q_{1123}$ output by the processing circuit 700 to a respective low-pass filter F1,F2,F3,F4 which, cutting off the high-frequency components, generates at its output a respective component $I_{113}, Q_{113}, I_{123}, Q_{123}$, such that the pair $I_{113}/Q_{113}$ is equal to the pair of digital components of the first source flow, $D_{112}$, transmitted via radio relay, and the pair $I_{123}/Q_{123}$ is equal to the pair of digital components of the second source flow, $D_{122}$, transmitted via radio relay;

P) sending the first digital pair $I_{113}/Q_{113}$ to the input of a first base-band module 912 able to recombine said pair of components $I_{113}/Q_{113}$, serialize the bits and reconstruct at the output the corresponding source digital flow $D_{112}$;

Q) sending the second digital pair $I_{123}/Q_{123}$ to the input of a second base-band module 922 able recombine said pair of components $I_{123}/Q_{123}$, serialize the bits and reconstruct at the output the corresponding source digital flow $D_{122}$.

It is envisaged moreover that the method described can be applied also in the case where the QAM demodulator is of the digital type; in this case it is envisaged performing A/D conversion upstream of the QAM demodulator.

It is therefore clear how, as a result of the demodulation method and the associated processing circuit 700 according to the present invention, it is possible to demodulate with a single analog or digital QAM demodulator several QAM modulated signals located in different radiofrequency spectra.

In addition, the processing circuit 700 according to the present invention is simpler and less critical than a pair of QAM demodulators, as used in the prior art, thereby helping reduce the costs, increase reliability and reduce the critical nature of the circuits used for QAM demodulation in digital radio-relay links.

A further reason for the reduction in costs and circuit simplification achieved is the reduction in the number of A/D converters; in fact in the prior art four A/D converters are required to convert into digital form the outputs of two demodulators, while according to the present invention only a single pair of A/D converters is required for both the signals received and quadrature modulated if an analog QAM demodulator is used, and only a single A/D converter is required if a digital QAM demodulator is used.

It is also pointed out that the processing circuit and the method according to the present invention are applicable both in the case of a signal $S_{501}$ output by the receiver 500, at a radio frequency fc and in the case a signal $S_{501}$ at an intermediate frequency $f_i$.

**Claims**

1. Method for demodulating a pair of signals, i.e.

$$S1(t) = I_{113} \cos (\omega_{c1})t - Q_{113} \sin (\omega_{c1})t$$

which is quadrature amplitude modulated (QAM) by the components $(I_{113}, Q_{113})$ of a first digital source $(D_{112})$ with a band spectrum 2Δf centred on an associated carrier fc1

$$S2(t) = I_{123} \cos (\omega_{c2})t - Q_{123} \sin (\omega_{c2})t$$

which is quadrature amplitude modulated (QAM) by the components $(I_{123}, Q_{123})$ of a second digital source $(D_{122})$, with a band spectrum 2Δf centred on an associated carrier fc2
the channel spacing of the two signals being equal to 2Δf,
**<u>characterized in that</u>** it comprises the following step

- defining a sum signal $(S_{401})$ for the said modulated signals (S1(t),S2(t)) received through the antenna, which is in turn a quadrature amplitude modulated (QAM) signal centred on a suppressed carrier of frequency

$$fc = (fc2 + fc1)/2 = fc1 + \Delta f = fc2 - \Delta f;$$

which is central with respect to the spectra of the two modulated signals (S1(t),S2(t));
- sending the sum signal $(S_{401})$ to a radio receiver (500) which generates at its output an amplified sum signal $(S_{501})$;
- sending the amplified sum signal $(S_{501})$ to the input of a single QAM demodulator (600) working on said central suppressed carrier of frequency fc;
- demodulating the said sum signal on the said central suppressed carrier of frequency fc with generation of two quadrature components (Ic,Qc) defined by

$$I_c = (I_{113} + I_{123}) \cos \Delta\omega t + (Q_{113} - Q_{123}) \sin \Delta\omega t = (I_{201})$$

$$Q_c = (Q_{113} + Q_{123}) \cos \Delta\omega t + (I_{123} - I_{113}) \sin \Delta\omega t = (Q_{201})$$

G) sending the first component $(I_{201})$ output by the QAM demodulator (600) to a first multiplier $(M_{721})$ and multiplying it by a factor cosΔωt, generating a first product signal $I_{721} = I_{201\cos \Delta\omega t}$;
H) sending the said first component $(I_{201})$ to a second multiplier $(M_{722})$ and multiplying it by a factor sin Δωt, generating a second product signal $I_{722} = I_{201\sin \Delta\omega t}$;
I) sending the second component $(Q_{201})$ output by the QAM demodulator to a third multiplier $(M_{723})$ and multiplying it by a factor sinΔωt, generating a third product signal $Q_{723} = Q_{201\sin \Delta\omega}$;
J) sending the same second component $(Q_{201})$ to a fourth multiplier $(M_{724})$ and multiplying it by a factor cos Δωt, generating a fourth product signal $Q_{724} = Q_{201\cos \Delta\omega}$;
K) sending the said first product signal $(I_{721})$ and third product signal $(Q_{723})$ to the input of. a first adder

($A_{731}$) which generates a first difference signal

$$I_{1113}=I_{721}-Q_{723}=I_{113}-Q_{123}\sin 2\Delta\omega t+I_{123}\cos 2\Delta\omega t;$$

L) sending the said second product signal ($I_{722}$) and fourth product signal ($Q_{724}$) to the input of a second adder ($A_{722}$) which generates a first sum signal

$$Q_{1113}=Q_{724}+I_{722}=Q_{113}+I_{123}\sin 2\Delta\omega t+Q_{123}\cos 2\Delta\omega t;$$

M) sending the said first product signal ($I_{721}$) and third product signal ($Q_{723}$) to the input of a third adder ($A_{733}$) which generates a second sum signal

$$I_{1123}=I_{721}+Q_{723}=I_{123}+Q_{113}\sin 2\Delta\omega t+I_{113}\cos 2\Delta\omega t;$$

N) sending the said fourth product signal ($Q_{724}$) and second product signal ($I_{722}$) to the input of a fourth adder ($A_{734}$) which generates a second difference signal

$$Q_{1123}=Q_{724}-I_{722}=Q_{123}-I_{113}\sin 2\Delta\omega t+Q_{113}\cos 2\Delta\omega t.$$

**2.** Method according to Claim 1, **characterized in that** that the two pairs of processed signals

$$I_{1113} = I_{113} - Q_{123} \sin 2\Delta\omega t + I_{123} \cos 2\Delta\omega t$$

$$Q_{1113} = Q_{113} + I_{123} \sin 2\Delta\omega t + Q_{123} \cos 2\Delta\omega t$$

and

$$I_{1123} = I_{123} + Q_{113} \sin 2\Delta\omega t + I_{113} \cos 2\Delta\omega t$$

$$Q_{1123} = Q_{123} - I_{113} \sin 2\Delta\omega t + Q_{113} \cos 2\Delta\omega t$$

are filtered by means of a respective low-pass filter (F1,F2,F3,F4) which generates two respective pairs of base-band signals ($I_{113}/Q_{113}$, $I_{123}/Q_{123}$).

**3.** Method according to Claim 2, **characterized in that** the two pairs of base-band signals ($I_{113}/Q_{113}$, $I_{123},Q_{123}$) are recombined and serialized so as to reconstruct the source digital flows ($D_{112},D_{112}$) transmitted via radio relay.

**4.** Method according to Claim 1, **characterized in that** the QAM demodulation is digital.

**5.** Method according to Claim 4 **characterized in that** the amplified modulated sum signal ($S_{501}$) received is converted (A/D) into digital before being sent to the input of the QAM demodulator.

**6.** Method according to Claim 1, **characterized in that** that the QAM demodulation is analog.

7. Method according to Claim 6, **characterized in that** the pair of signals output by the QAM demodulator is converted (A/D) into a pair of digital signals.

8. Apparatus for demodulating a pair **of** signals, i.e.

$$S1(t) = I_{113} \cos (\omega_{c1})t - \dot{Q}_{113} \sin (\omega_{c1})t$$

which is quadrature amplitude modulated (QAM) by the components $(I_{113}, Q_{113})$ of a first digital source $(D_{112})$, with a band spectrum $2\Delta f$ centred on an associated carrier fc1

$$S2(t) = I_{123} \cos (\omega_{c2})t - {}^{'}Q_{123} \sin (\omega_{c2})t$$

which is quadrature amplitude modulated (QAM) by the components $(I_{123}, Q_{123})$ of a second digital source $(D_{122})$, with a band spectrum $2\Delta f$ centred on an associated carrier fc2
the channel spacing of the two signals being equal to $2\Delta f$
**characterized in that** it comprises:

- a single QAM demodulator (600;1600) centred on a suppressed carrier of frequency

$$\mathbf{fc} = (fc2 + fc1)/2 = fc_1 + \Delta f = fc_2 - \Delta f;$$

which is central with respect to a sum signal of the said modulated signals (S1(t),S2(t)) and which is in turn a quadrature amplitude modulated (QAM) signal;
said demodulator (600) working on said central suppressed carrier of frequency fc to generate at its output a first component

$$I_{201} = (I_{113} + I_{123}) \cos \Delta\omega t + (Q_{113} - Q_{123}) \sin \Delta\omega t$$

and a second component

$$Q_{201} = (Q_{113} + Q_{123}) \cos \Delta\omega t + (I_{123} - I_{113}) \sin \Delta\omega t$$

in which $I_{113}/Q_{113}$ and $I_{123}/Q_{123}$ are two pairs of base-band components of the pair of source digital flows $(D_{112}, D_{122})$ transmitted via radio relay, and
- a processing circuit (700) comprising:

at least one multiplier module (720), to the input of which the pair of components $(I_{201}/Q_{201})$ output by the QAM demodulator (600;1600) is sent, and at least one adder module (730) in cascade with the said multiplier module (720),
said at least one multiplier module (720) comprising four multipliers $(M_{721}, M_{722}, M_{723}, M_{724})$,
said at least one adder module (730) comprises four adders $(A_{731}, A_{732}, A_{733}, A_{734})$,
and **in that**:

. the first multiplier $(M_{721})$ multiplies the first input signal component $(I_{201})$ by a factor cos $\Delta\omega t$, generating a signal $I_{721} = I_{201\cos \Delta\omega t}$;
. the second multiplier $(M_{722})$ multiplies the first input signal component $(I_{201})$ by a factor sin $\Delta\omega t$, generating a signal $I_{722} = I_{201\sin \Delta\omega t}$;
. the third multiplier $(M_{723})$ multiplies the first input signal component $(I_{201})$ by a factor sin $\Delta\omega t$, generating

a signal $Q_{723} = Q_{201\sin \Delta\omega t}$;

. the fourth multiplier ($M_{724}$) multiplies the second input signal component ($I_{201}$) by a factor cos $\Delta\omega t$, generating a signal $Q_{724} = Q_{201\cos \Delta\omega t}$;

. the first adder ($A_{731}$) receives at its input the signal ($I_{721}$) output by the first multiplier ($M_{721}$) and the signal ($Q_{723}$) output by the third multiplier ($M_{723}$) and calculates their difference, generating at its output a signal

$$I_{1113} = I_{113} - Q_{123} \sin 2\Delta\omega t + I_{123} \cos 2\Delta\omega t$$

. the second adder ($A_{732}$) receives at its input the signal ($I_{722}$) output by the second multiplier ($M_{722}$) and the signal ($Q_{724}$) output by the fourth multiplier ($M_{724}$) and calculates their sum, generating at its output a signal

$$Q_{1113} = Q_{113} + I_{123} \sin 2\Delta\omega t + Q_{123} \cos 2\Delta\omega t$$

. the third adder ($A_{733}$) receives at its input the signal ($I_{721}$) output by the first multiplier ($M_{721}$) and the signal ($Q_{723}$) output by the third multiplier ($M_{723}$) and calculates their sum, generating at its output a signal

$$I_{1123} = I_{123} + Q_{113} \sin 2\Delta\omega t + I_{113} \cos 2\Delta\omega t$$

. the fourth adder ($A_{734}$) receives at its input the signal ($I_{722}$) output by the second multiplier ($M_{722}$) and the signal ($Q_{724}$) output by the fourth multiplier ($M_{724}$) and calculates their difference, generating at its output a signal

$$Q_{1123} = Q_{123} - I_{113} \sin 2\Delta\omega t + Q_{113} \cos 2\Delta\omega t$$

the two pairs of signal components being generated at the output of the said processing circuit (700), namely

$$I_{1113} = I_{113} - Q_{123} \sin 2\Delta\omega t + I_{123} \cos 2\Delta\omega t$$

$$Q_{1113} = Q_{113} + I_{123} \sin 2\Delta\omega t + Q_{123} \cos 2\Delta\omega t$$

and

$$I_{1123} = I_{123} + Q_{113} \sin 2\Delta\omega t + I_{113} \cos 2\Delta\omega t$$

$$Q_{1123} = Q_{123} - I_{113} \sin 2\Delta\omega t + Q_{113} \cos 2\Delta\omega t$$

containing all the information of the pair of source flows ($D_{112}, D_{122}$) transmitted in modulation.

9. Apparatus according to Claim 8, **characterized in that** the multiplication factors, cos $\Delta\omega t$ and sin $\Delta\omega t$, are contained in a respective static memory (728,729) of the same processing module (720).

**10.** Apparatus according to Claim **8, characterized in that** the multiplication factors, $\cos\Delta\omega t$ and $\sin\Delta\omega t$, are respectively the samples of a cosinusoid and a sinusoid at pulsation $\Delta\omega$.

**11.** Apparatus according to Claim 8, **characterized in that** the said four product signals ($I_{721}, I_{722}, Q_{723}, Q_{724}$), output by the respective multipliers ($M_{721}, M_{722}, M_{723}, M_{724}$), are sent in pairs to the four adders ($A_{731}, A_{732}, A_{733}, A_{734}$) of the adder module (730).

**12.** Apparatus according to Claim 8, **characterized in that** it comprises a low-pass filter (F1,F2,F3,F4) for each signal component ($I_{1113}, Q_{1113}, I_{1123}, Q_{1123}$) output by the processing circuit, able to select a respective base-band signal component ($I_{113}/Q_{113}, I_{123}/Q_{123}$).

**13.** Apparatus according to Claim 12, **characterized in that** it comprises a base-band circuit (921,922) for each base-band signal pair, able to recombine and serialize the input signals so as to reconstruct the source digital flows ($D_{112}, D_{122}$) transmitted via radio relay.

**14.** Apparatus according to Claim 8, **characterized in that** that said QAM demodulator (600) is analog.

**15.** Apparatus according to Claim 14, **characterized in that** it comprises a pair of A/D converters (620,630) arranged downstream of the QAM demodulator (600), each converter receiving at its input an associated signal component ($I_{601}, Q_{601}$) output by the demodulator (600) itself.

**16.** Apparatus according to Claim 8, **characterized in that** that said QAM demodulator (1600) is digital.

**17.** Apparatus according to Claim 8, **characterized in that** it comprises an A/D converter (1620) arranged upstream of the demodulator (1600).

**Patentansprüche**

**1.** Verfahren zum Demodulieren eines Paars von Signalen, d.h.

$$S1\,(t) = I_{113}\cos(\omega_{c1})t - Q_{113}\sin(\omega_{c1})\,t$$

das durch die Komponenten ($I_{113}$, $Q_{113}$) einer ersten digitalen Quelle ($D_{112}$) quadraturamplitudenmoduliert (QAM) ist, wobei ein Bandspektrum $2\Delta f$ an einem zugeordneten Träger $f_{c1}$ zentriert ist,

$$S2\,(t) = I_{123}\cos(\omega_{c2})\,t - Q_{123}\sin(\omega_{c2})\,t$$

das durch die Komponenten ($I_{123}$, $Q_{123}$) einer zweiten digitalen Quelle ($D_{122}$) quadraturamplitudenmoduliert ist, wobei ein Bandspektrum $2\Delta f$ an einem zugeordneten Träger $f_{c2}$ zentriert ist, wobei der Kanalabstand der zwei Signale gleich $2\Delta f$ ist, **dadurch gekennzeichnet, dass** es den folgenden Schritt umfasst:

- Definieren eines Summensignals ($S_{401}$) für die modulierten Signale (S1(t), S2(t)), die durch die Antenne empfangen werden, das wiederum ein quadraturamplitudenmoduliertes (QAM) Signal ist, das an einem unterdrückten Träger der Frequenz $fc = (fc2 + fc1) / 2 = f_{c1} + \Delta f = f_{c2} - \Delta f$ eingemittet ist; das bezüglich der Spektren der zwei modulierten Signale (S1 (t), S2(t)) mittig ist;
- Senden des Summensignals ($S_{401}$) zu einem Funkempfänger (500), der an seinem Ausgang ein verstärktes Summensignal ($S_{501}$) erzeugt;
- Senden des verstärkten Summensignals ($S_{501}$) zu dem Eingang eines einzelnen QAM-Demodulators (600), der auf dem mittigen unterdrückten Träger der Frequenz fc arbeitet;
- Demodulieren des Summensignals an dem mittigen unterdrückten Träger der Frequenz fc mit Erzeugung von zwei Quadraturkomponenten ($I_c$, $Q_c$), definiert durch

$$I_c = (I_{113} + I_{123})\cos \Delta\omega t + (Q_{113} - Q_{123}) \sin \Delta\omega t = (I_{201})$$

$$Q_c = (Q_{113} + Q_{123})\cos \Delta\omega t + (I_{123} - I_{113}) \sin \Delta\omega t = (Q_{201})$$

G) Senden der ersten Komponente ($I_{201}$), die von dem QAM-Demodulator (600) ausgegeben wird, zu einem ersten Multiplikator ($M_{721}$) und Multiplizieren derselben mit einem Faktor $\cos\Delta\omega t$, was ein erstes Produktsignal $I_{721} = I_{201} \cos \Delta\omega t$ erzeugt;

H) Senden der ersten Komponente ($I_{201}$) zu einem zweiten Multiplikator ($M_{722}$) und Multiplizieren derselben mit einem Faktor $\sin\Delta\omega t$, was ein zweites Produktsignal $I_{722} = I_{201}\sin \Delta\omega t$ erzeugt;

I) Senden der zweiten Komponente ($Q_{201}$), die von dem QAM-Demodulator ausgegeben wird, zu einem dritten Multiplikator ($M_{723}$) und Multiplizieren derselben mit einem Faktor $\sin\Delta\omega t$, was ein drittes Produktsignal $Q_{723} = Q_{201}\sin \Delta\omega$ erzeugt;

J) Senden der gleichen zweiten Komponente ($Q_{201}$) zu einem vierten Multiplikator ($M_{724}$) und Multiplizieren derselben mit einem Faktor $\cos \Delta\omega t$, was ein viertes Produktsignal $Q_{724} = Q_{201} \cos \Delta\omega$ erzeugt;

K) Senden des ersten Produktsignals ($I_{721}$) und des dritten Produktsignals ($Q_{723}$) zu dem Eingang eines ersten Addierers ($A_{731}$), der ein erstes Dififerenzsignal

$$I_{1113} = I_{721} - Q_{723 =} I_{113} - Q_{123}\sin 2\Delta\omega t + I_{123}\cos 2\Delta\omega t$$

erzeugt;

L) Senden des zweiten Produktsignals ($I_{722}$) und des vierten Produktsignals ($Q_{724}$) zu dem Eingang eines zweiten Addierers ($A_{722}$), der ein erstes Summensignal

$$Q_{1113} = Q_{724} + I_{722} = Q_{113 +} I_{123} \sin 2\Delta\omega t + Q_{123}\cos 2\Delta\omega t$$

erzeugt;

M) Senden des ersten Produktsignals ($I_{721}$) und des dritten Produktsignals ($Q_{723}$) zu dem Eingang eines dritten Addierers ($A_{733}$), der ein zweites Summensignal

$$I_{1123} = I_{721} + Q_{723} = I_{123} + Q_{113} \sin 2\Delta\omega t + I_{113}\cos 2\Delta\omega t$$

erzeugt;

N) Senden des vierten Produktsignals ($Q_{724}$) und des zweiten Produktsignals ($I_{722}$) zu dem Eingang eines vierten Addierers ($A_{734}$), der ein zweites Dififerenzsignal

$$Q_{1123} = Q_{724} - I_{722} = Q_{123} - I_{113}\sin 2\Delta\omega t + Q_{113}\cos 2\Delta\omega t$$

erzeugt.

2. Verfahren nach Anspruch 1, **dadurch gekennzeichnet, dass** die zwei Paare von verarbeiteten Signalen

$$I_{1113} = I_{113} - Q_{123} \sin 2\Delta\omega t + I_{123} \cos 2\Delta\omega t$$

$$Q_{1113} = Q_{113} - I_{123} \sin 2\Delta\omega t + Q_{123} \cos 2\Delta\omega t$$

und

$$I_{1123} = I_{123} - Q_{113} \sin 2\Delta\omega t + I_{113} \cos 2\Delta\omega t$$

$$Q_{1123} = Q_{123} - I_{113} \sin 2\Delta\omega t + Q_{113} \cos 2\Delta\omega t$$

mittels eines jeweiligen Tiefpassfilters (F1, F2, F3, F4) gefiltert werden, was zwei jeweilige Paare von Basisbandsignalen ($I_{113}/Q_{113}$, $I_{123}/Q_{123}$) erzeugt.

3. Verfahren nach Anspruch 2, **dadurch gekennzeichnet, dass** die zwei Paare von Basisbandsignalen ($I_{113}/Q_{113}$, $I_{123}$, $Q_{123}$) neu kombiniert und serialisiert werden, um die mittels Richtfunk übermittelten digitalen Quellenflüsse ($D_{112}$, $D_{122}$) zu rekonstruieren.

4. Verfahren nach Anspruch 1, **dadurch gekennzeichnet, dass** die QAM-Demodulation digital ist.

5. Verfahren nach Anspruch 4, **dadurch gekennzeichnet, dass** das empfangene verstärkte modulierte Summensignal ($S_{501}$) zu digital umgewandelt wird (A/D), bevor es zu dem Eingang des QAM-Demodulators gesendet wird.

6. Verfahren nach Anspruch 1, **dadurch gekennzeichnet, dass** die QAM-Demodulation analog ist.

7. Verfahren nach Anspruch 6, **dadurch gekennzeichnet, dass** das Paar von Signalen, das von dem QAM-Demodulator ausgegeben wird, in ein Paar von digitalen Signalen umgewandelt wird (A/D).

8. Vorrichtung zum Demodulieren eines Paars von Signalen, d.h.

$$S1\,(t) = I_{113} \cos (\omega_{c1})\, t - Q_{113} \sin (\omega_{c1})\, t$$

das durch die Komponenten ($I_{113}$, $Q_{113}$) einer ersten digitalen Quelle ($D_{112}$) quadraturamplitudenmoduliert (QAM) ist, wobei ein Bandspektrum $2\Delta f$ an einem zugeordneten Träger $f_1$ eingemittelt ist,

$$S2\,(t) = I_{123} \cos (\omega_{c2})\, t - Q_{123} \sin (\omega_{c2})\, t$$

das durch die Komponenten ($I_{123}$, $Q_{123}$) einer zweiten digitalen Quelle ($D_{122}$) quadraturamplitudenmoduliert (QAM) ist, wobei ein Bandspektrum $2\Delta f$ an einem zugeordneten Träger $f_{c2}$ eingemittelt ist,
wobei der Kanalabstand der zwei Signale gleich $2\Delta f$ ist,
**dadurch gekennzeichnet, dass** sie umfasst:

- einen einzigen QAM-Demodulator (600; 1600), der an einem unterdrückten Träger der Frequenz fc = (fc2 + fc1) / 2 = $f_{c1}$ + $\Delta f$ = $f_{c2}$ - $\Delta f$ eingemittelt ist;
der bezüglich eines Summensignals der modulierten Signale (S1(t),S2(t)) mittig ist und der wiederum ein quadraturamplitudenmoduliertes (QAM) Signal ist;
wobei der Demodulator (600) auf dem mittigen unterdrückten Träger der Frequenz fc arbeitet, um an seinem Ausgang eine erste Komponente

$$I_{201} = (I_{113} + I_{123}) \cos \Delta\omega t + (Q_{113} - Q_{123}) \sin \Delta\omega t$$

und eine zweite Komponente

$$Q_{201} = (Q_{113} + Q_{123}) \cos \Delta\omega t + (I_{123} - I_{113}) \sin \Delta\omega t$$

zu erzeugen,
wobei $I_{113}/Q_{113}$ und $I_{123}/Q_{123}$ zwei Paare von Basisbandkomponenten des Paars der digitalen Quellenflüsse $(D_{112}, D_{122})$, die mittels Richtfunk übermittelt werden, sind und

- eine Verarbeitungsschaltung (700), umfassend:

mindestens ein Multiplikatormodul (720), zu dessen Eingang das Paar von Komponenten $(I_{201}/Q_{201})$, das von dem QAM-Demodulator (600; 1600) ausgegeben wird, gesendet wird, und mindestens ein Addierermodul (730) in Kaskade mit dem Multiplikatormodul (720),
wobei das mindestens eine Multiplikatormodul (720) vier Multiplikatoren ($M_{721}$, $M_{722}$, $M_{723}$, $M_{724}$) umfasst,
das mindestens eine Addierermodul (730) vier Addierer ($A_{731}$, $A_{732}$, $A_{733}$, $A_{734}$), umfasst,
und dass:

■ der erste Multiplikator ($M_{721}$) die erste Eingangssignalkomponente ($I_{201}$) mit einem Faktor cos $\Delta\omega t$ multipliziert, was ein Signal $I_{721} = I_{201} \cos \Delta\omega t$ erzeugt;
■ der zweite Multiplikator ($M_{722}$) die erste Eingangssignalkomponente ($I_{201}$) mit einem Faktor sin $\Delta\omega t$ multipliziert, was ein Signal $I_{722} = I_{201} \sin \Delta\omega t$ erzeugt;
■ der dritte Multiplikator ($M_{723}$) die erste Eingangssignalkomponente($I201$) mit einem Faktor sin $\Delta\omega t$ multipliziert, was ein Signal $Q_{724} = Q_{201} \sin \Delta\omega t$ erzeugt;
■ der vierte Multiplikator ($M724$) die zweite Eingangssignalkomponente ($I_{201}$) mit einem Faktor cos $\Delta\omega t$ multipliziert, was ein Signal $Q_{724} = Q_{201} \cos \Delta\omega t$ erzeugt;
■ der erste Addierer ($A_{731}$) an seinem Eingang das Signal ($I_{721}$), das von dem ersten Multiplikator ($M_{721}$) ausgegeben wird, und das Signal ($Q_{723}$), das von dem dritten Multiplikator ($M_{723}$) ausgegeben wird, empfängt und deren Differenz berechnet, was an seinem Ausgang ein Signal

$$I_{1113} = I_{113} - Q_{123} \sin 2\Delta\omega t + I_{123} \cos 2\Delta\omega t$$

erzeugt,
■ der zweite Addierer ($A_{732}$) an seinem Eingang das Signal ($I_{722}$), das von dem zweiten Multiplikator ($M_{722}$) ausgegeben wird, und das Signal ($Q_{724}$), das von dem vierten Multiplikator ($M_{724}$) ausgegeben wird, empfängt und deren Summe berechnet, was an seinem Ausgang ein Signal

$$Q_{1113} = Q_{113} + I_{123} \sin 2\Delta\omega t + Q_{123} \cos 2\Delta\omega t$$

erzeugt,
■ der dritte Addierer ($A_{733}$) an seinem Eingang das Signal ($I_{721}$), das von dem ersten Multiplikator ($M_{721}$) ausgegeben wird, und das Signal ($Q_{723}$), das von dem dritten Multiplikator ($M_{723}$) ausgegeben wird, empfängt und deren Summe berechnet, was an seinem Ausgang ein Signal

$$I_{1123} = I_{123} - Q_{113} \sin 2\Delta\omega t + I_{113} \cos 2\Delta\omega t$$

erzeugt,
■ der vierte Addierer ($A_{734}$) an seinem Eingang das Signal ($I_{722}$), das von dem zweiten Multiplikator ($M_{722}$) ausgegeben wird, und das Signal ($Q_{724}$), das von dem vierten Multiplikator ($M_{724}$) ausgegeben wird, empfängt und deren Differenz berechnet, was an seinem Ausgang ein Signal

$$Q_{1123} = Q_{123} + I_{113} \sin 2\Delta\omega t + Q_{113} \cos 2\Delta\omega t$$

erzeugt,
wobei die zwei Paare von Signalkomponenten, die an dem Ausgang der Verarbeitungsschaltung (700) erzeugt werden, nämlich

$$I_{1113} = I_{113} - Q_{123} \sin 2\Delta\omega t + I_{123} \cos 2\Delta\omega t$$

$$Q_{1113} = Q_{113} - I_{123} \sin 2\Delta\omega t + I_{123} \cos 2\Delta\omega t$$

und

$$I_{1123} = I_{123} - Q_{113} \sin 2\Delta\omega t + I_{113} \cos 2\Delta\omega t$$

$$Q_{1123} = Q_{123} - I_{113} \sin 2\Delta\omega t + I_{113} \cos 2\Delta\omega t$$

alle Informationen des Paars von Quellenflüssen ($D_{112}$, $D_{122}$) enthalten, die in Modulation übermittelt werden.

9. Vorrichtung nach Anspruch 8, **dadurch gekennzeichnet, dass** die Multiplikationsfaktoren cos $\Delta\omega t$ und sin $\Delta\omega t$ in einem jeweiligen statischen Speicher (728, 729) des gleichen Verarbeitungsmoduls (720) enthalten sind.

10. Vorrichtung nach Anspruch 8, **dadurch gekennzeichnet, dass** die Multiplikationsfaktoren cos$\Delta\omega t$ t und sin$\Delta\omega t$ jeweils die Abtastungen einer Cosinuskurve und einer Sinuskurve bei Pulsation $\Delta\omega$ sind.

11. Vorrichtung nach Anspruch 8, **dadurch gekennzeichnet, dass** die vier Produktsignale ($I_{721}$, $I_{722}$, $Q_{723}$, $Q_{724}$), die von den jeweiligen Multiplikatoren ($M_{721}$, $M_{722}$, $M_{723}$, $M_{724}$) ausgegeben werden, in Paaren zu den vier Addierern ($A_{731}$, $A_{732}$, $A_{733}$, $A_{734}$) des Addierermoduls (730) gesendet werden.

12. Vorrichtung nach Anspruch 8, **dadurch gekennzeichnet, dass** sie ein Tiefpassfilter (F1, F2, F3, F4) für jede Signalkomponente ($I_{1113}$, $Q_{1113}$, $I_{1123}$, $Q_{1123}$), die von der Verarbeitungsschaltung ausgegeben wird, umfasst, das eine jeweilige Basisbandsignalkomponente ($I_{113}/Q_{113}$, $I_{123}/Q_{123}$) wählen kann.

13. Vorrichtung nach Anspruch 12, **dadurch gekennzeichnet, dass** sie eine Basisbandschaltung (921, 922) für jedes Basisbandsignalpaar umfasst, die die Eingangssignale neu kombinieren und serialisieren kann, um die digitalen Quellenflüsse ($D_{112}$, $D_{122}$), die mittels Richtfunk übermittelt werden, zu rekonstruieren.

14. Vorrichtung nach Anspruch 8, **dadurch gekennzeichnet, dass** der QAM-Demodulator (600) analog ist.

15. Vorrichtung nach Anspruch 14, **dadurch gekennzeichnet, dass** sie ein Paar von A/D-Wandlern (620, 630) umfasst, die stromabwärts des QAM-Demodulators (600) angeordnet sind, wobei jeder Wandler an seinem Eingang eine zugeordnete Signalkomponente ($I_{601}/Q_{601}$) empfängt, die von dem Demodulator (600) selbst ausgegeben wird.

16. Vorrichtung nach Anspruch 8, **dadurch gekennzeichnet, dass** der QAM-Demodulator (1600) digital ist.

17. Vorrichtung nach Anspruch 8, **dadurch gekennzeichnet, dass** sie einen A/D-Wandler (1620) umfasst, der stromaufwärts des Demodulators (1600) angeordnet ist.

**Revendications**

1. Procédé de démodulation de deux signaux, c'est-à-dire

$$S1(t) = I_{113} \cos (\omega c1)t - Q_{113} \sin (\omega c1)t$$

qui a fait l'objet d'une modulation d'amplitude en quadrature (QAM) par les composantes ($I_{113}$, $Q_{113}$) d'une première source numérique ($D_{112}$), avec un spectre de bande $2\Delta f$ centré sur une porteuse associée $f_{c1}$

$$S2(t) = I_{123} \cos (\omega c2)t - Q_{123} \sin (\omega c2)t$$

qui a fait l'objet d'une modulation d'amplitude en quadrature (QAM) par les composantes ($I_{123}$, $Q_{123}$) d'une seconde source numérique ($D_{122}$), avec un spectre de bande $2\Delta f$ centré sur une porteuse associée $f_{c2}$
l'espacement entre canaux des deux signaux étant égal à $2\Delta f$,
**caractérisé en ce qu'**il comprend les étapes suivantes :

- définir un signal de somme ($S_{401}$) desdits signaux modulés (S1(t), S2(t)) reçus par le biais de l'antenne, qui est à son tour un signal de modulation d'amplitude en quadrature (QAM) centré sur une porteuse supprimée de fréquence

$$f_c = (f_{c2} + f_{c1})/2 = f_{c1} + \Delta f = f_{c2} - \Delta f ;$$

qui est centrale par rapport aux spectres des deux signaux modulés (S1(t), S2(t)) ;
- envoyer le signal de somme ($S_{401}$) à un récepteur radio (500) qui génère, au niveau de sa sortie, un signal de somme amplifié ($S_{501}$) ;
- envoyer le signal de somme amplifié ($S_{501}$) à l'entrée d'un unique démodulateur QAM (600) travaillant sur ladite porteuse supprimée centrale de fréquence $f_c$ ;
- démoduler ledit signal de somme sur ladite porteuse supprimée centrale de fréquence $f_c$ en générant deux composantes de quadrature ($I_c$, $Q_c$) définies par

$$I_c = (I_{113} + I_{123}) \cos \Delta\omega t + (Q_{113} - Q_{123}) \sin \Delta\omega t = (I_{201})$$

$$Q_c = (Q_{113} + Q_{123}) \cos \Delta\omega t + (I_{123} - I_{113}) \sin \Delta\omega t = (Q_{201})$$

G) envoyer la première composante ($I_{201}$) délivrée par le démodulateur QAM (600) à un premier multiplicateur ($M_{721}$) et la multiplier par un facteur $\cos \Delta\omega t$, en générant un premier signal de produit $I_{721} = I_{201} \cos \Delta\omega t$ ;
H) envoyer ladite première composante ($I_{201}$) à un deuxième multiplicateur ($M_{722}$) et la multiplier par un facteur $\sin \Delta\omega t$, en générant un deuxième signal de produit $I_{722} = I_{201} \sin \Delta\omega t$ ;
I) envoyer la seconde composante ($Q_{201}$) délivrée par le démodulateur QAM à un troisième multiplicateur ($M_{723}$) et la multiplier par un facteur $\sin \Delta\omega t$, en générant un troisième signal de produit $Q_{723} = Q_{201} \sin \Delta\omega$ ;
J) envoyer cette même seconde composante ($Q_{201}$) à un quatrième multiplicateur ($M_{724}$) et la multiplier par un facteur $\cos \Delta\omega t$, en générant un quatrième signal de produit $Q_{724} = Q_{201} \cos \Delta\omega$ ;
K) envoyer ledit premier signal de produit ($I_{721}$) et ledit troisième signal de produit ($Q_{723}$) à l'entrée d'un premier additionneur ($A_{731}$) qui génère un premier signal de différence

$$I_{1113} = I_{721} - Q_{723} = I_{113} - Q_{123} \sin 2\Delta\omega t + I_{123} \cos 2\Delta\omega t \; ;$$

L) envoyer ledit deuxième signal de produit ($I_{722}$) et un quatrième signal de produit ($Q_{724}$) à l'entrée d'un deuxième additionneur ($A_{722}$) qui génère un premier signal de somme

$$Q_{1113} = Q_{724} + I_{722} = Q_{113} + I_{123} \sin 2\Delta\omega t + Q_{123} \cos 2\Delta\omega t \; ;$$

M) envoyer ledit premier signal de produit ($I_{721}$) et ledit troisième signal de produit ($Q_{723}$) à l'entrée d'un troisième additionneur ($A_{733}$) qui génère un second signal de somme

$$I_{1123} = I_{721} + Q_{723} = I_{123} + Q_{113} \sin 2\Delta\omega t + I_{113} \cos 2\Delta\omega t \; ;$$

N) envoyer ledit quatrième signal de produit ($Q_{724}$) et ledit deuxième signal de produit ($I_{722}$) à l'entrée d'un quatrième additionneur ($A_{734}$) qui génère un second signal de différence

$$Q_{1123} = Q_{724} - I_{722} = Q_{123} - I_{113} \sin 2\Delta\omega t + Q_{113} \cos 2\Delta\omega t.$$

2. Procédé selon la revendication 1, **caractérisé en ce que** les deux paires de signaux traités

$$I_{1113} = I_{113} - Q_{123} \sin 2\Delta\omega t + I_{123} \cos 2\Delta\omega t$$

$$Q_{1113} = Q_{113} + I_{123} \sin 2\Delta\omega t + Q_{123} \cos 2\Delta\omega t$$

et

$$I_{1123} = I_{123} + Q_{113} \sin 2\Delta\omega t + I_{113} \cos 2\Delta\omega t$$

$$Q_{1123} = Q_{123} - I_{113} \sin 2\Delta\omega t + Q_{113} \cos 2\Delta\omega t$$

sont filtrées au moyen d'un filtre passe-bas respectif (F1, F2, F3, F4) qui génère deux paires respectives de signaux de bande de base ($I_{113}/Q_{113}$, $I_{123}/Q_{123}$).

3. Procédé selon la revendication 2, **caractérisé en ce que** les deux paires de signaux de bande de base ($I_{113}/Q_{113}$, $I_{123}/Q_{123}$) sont recombinées et sérialisées de façon à reconstruire les flux numériques de source ($D_{112}$, $D_{122}$) transmis par le biais d'un relais radio.

4. Procédé selon la revendication 1, **caractérisé en ce que** la démodulation QAM est numérique.

5. Procédé selon la revendication 4, **caractérisé en ce que** le signal de somme modulé amplifié ($S_{501}$) reçu est c noverti d'analogique en numérique (A/D) avant d'être envoyé à l'entrée du démodulateur QAM.

6. Procédé selon la revendication 1, **caractérisé en ce que** la démodulation QAM est analogique.

7. Procédé selon la revendication 6, **caractérisé en ce que** les deux signaux délivrés par le démodulateur QAM s not convertis d'analogique en numérique (A/D) pour obtenir deux signaux numériques.

**8.** Appareil de démodulation de deux signaux, c'est-à-dire

$$S1(t) = I_{113} \cos (\omega c1)t - Q_{113} \sin (\omega c1)t$$

qui a fait l'objet d'une modulation d'amplitude en quadrature (QAM) par les composantes ($I_{113}$, $Q_{113}$) d'une première source numérique ($D_{112}$), avec un spectre de bande $2\Delta f$ centré sur une porteuse associée $f_{c1}$

$$S2(t) = I_{123} \cos (\omega c2)t - Q_{123} \sin (\omega c2)t$$

qui a fait l'objet d'une modulation d'amplitude en quadrature (QAM) par les composantes ($I_{123}$, $Q_{123}$) d'une seconde source numérique ($D_{122}$), avec un spectre de bande $2\Delta f$ centré sur une porteuse associée $fc2$
l'espacement entre canaux des deux signaux étant égal à $2\Delta f$,
**caractérisé en ce qu'**il comprend :

- un unique démodulateur QAM (600 ; 1600) centré sur une porteuse de fréquence supprimée

$$fc = (f_{c2} + f_{c1})/2 = f_{c1} + \Delta f = f_{c2} - \Delta f ;$$

qui est centrale par rapport à un signal de somme desdits signaux modulés (S1(t), S2(t)) et qui est à son tour un signal de modulation d'amplitude en quadrature (QAM) ;
ledit démodulateur (600) travaillant sur ladite porteuse supprimée centrale de fréquence $f_c$ pour générer une première composante au niveau de sa sortie

$$I_{201} = (I_{113} + I_{123}) \cos \Delta\omega t + (Q_{113} - Q_{123}) \sin \Delta\omega t$$

et une seconde composante

$$Q_{201} = (Q_{113} + Q_{123}) \cos \Delta\omega t + (I_{123} - I_{113}) \sin \Delta\omega t$$

dans lesquelles $I_{113}/Q_{113}$ et $I_{123}/Q_{123}$ sont deux paires de composantes de bande de base de la paire de flux numériques de source ($D_{112}$, $D_{122}$) transmise par le biais du relais radio, et
- un circuit de traitement (700) comprenant :

au moins un module multiplicateur (720), à l'entrée duquel les deux composantes ($I_{201}/Q_{201}$) délivrées par le démodulateur QAM (600 ; 1600) sont envoyées, et au moins un module additionneur (730) en cascade avec ledit module multiplicateur (720),
ledit au moins un module multiplicateur (720) comprenant quatre multiplicateurs ($M_{721}$, $M_{722}$, $M_{723}$, $M_{724}$),
ledit au moins un module additionneur (730) comprend quatre additionneurs ($A_{731}$, $A_{732}$, $A_{733}$, $A_{734}$),
et **en ce que** :

le premier multiplicateur ($M_{721}$) multiplie la première composante de signal d'entrée ($I_{201}$) par un facteur $\cos \Delta\omega t$, en générant un signal $I_{721} = I_{201} \cos \Delta\omega t$ ;
le second multiplicateur ($M_{722}$) multiplie la première composante de signal d'entrée ($I_{201}$) par un facteur $\sin \Delta\omega t$, en générant un signal $I_{722} = I_{201} \sin \Delta\omega t$ ;
le troisième multiplicateur ($M_{723}$) multiplie la première composante de signal d'entrée ($I_{201}$) par un facteur $\sin \Delta\omega t$, en générant un signal $Q_{724} = Q_{201} \sin \Delta\omega t$ ;
le quatrième multiplicateur ($M_{724}$) multiplie la deuxième composante de signal d'entrée ($I_{201}$) par un facteur $\cos \Delta\omega t$, en générant un signal $Q_{724} = Q_{201} \cos \Delta\omega t$ ;
le premier additionneur ($A_{731}$) reçoit, au niveau de son entrée, le signal ($I_{721}$ délivré par le premier multiplicateur ($M_{721}$) et le signal ($Q_{723}$) délivré par le troisième multiplicateur ($M_{723}$) et en calcule la différence, en générant un signal au niveau de sa sortie

$$I_{1113} = I_{113} - Q_{123} \sin 2\Delta\omega t + I_{123} \cos 2\Delta\omega t$$

le deuxième additionneur ($A_{732}$) reçoit, au niveau de son entrée, le signal ($I_{722}$) délivré par le deuxième multiplicateur ($M_{722}$) et le signal ($Q_{724}$) délivré par le quatrième multiplicateur ($M_{724}$) et en calcule la somme, en générant un signal au niveau de sa sortie

$$Q_{1113} = Q_{113} + I_{123} \sin 2\Delta\omega t + Q_{123} \cos 2\Delta\omega t$$

le troisième additionneur ($A_{733}$) reçoit, au niveau de son entrée, le signal ($I_{721}$) délivré par le premier multiplicateur ($M_{721}$) et le signal ($Q_{723}$) délivré par le troisième multiplicateur ($M_{723}$) et en calcule la somme, en générant un signal au niveau de sa sortie

$$I_{1123} = I_{123} + Q_{113} \sin 2\Delta\omega t + I_{113} \cos 2\Delta\omega t$$

le quatrième additionneur ($A_{734}$) reçoit, au niveau de son entrée, le signal ($I_{722}$) délivré par le deuxième multiplicateur ($M_{722}$) et le signal ($Q_{724}$) délivré par le quatrième multiplicateur ($M_{724}$) et en calcule la différence, en générant un signal au niveau de sa sortie

$$Q_{1123} = Q_{123} - I_{113} \sin 2\Delta\omega t + Q_{113} \cos 2\Delta\omega t$$

les deux paires de composantes de signaux étant générées au niveau de la sortie dudit circuit de traitement (700), à savoir

$$I_{1113} = I_{113} - Q_{123} \sin 2\Delta\omega t + I_{123} \cos 2\Delta\omega t$$

$$Q_{1113} = Q_{113} + I_{123} \sin 2\Delta\omega t + Q_{123} \cos 2\Delta\omega t$$

et

$$I_{1123} = I_{123} + Q_{113} \sin 2\Delta\omega t + I_{113} \cos 2\Delta\omega t$$

$$Q_{1123} = Q_{123} - I_{113} \sin 2\Delta\omega t + Q_{113} \cos 2\Delta\omega t$$

contenant toute l'information de la paire de flux de source ($D_{112}$, $D_{122}$) transmise en modulation.

9. Appareil selon la revendication 8, **caractérisé en ce que** les facteurs de multiplication, $\cos \Delta\omega t$ et $\sin \Delta\omega t$ s not contenus dans une mémoire statique respective (728, 729) du même module de traitement (720).

10. Appareil selon la revendication 8, **caractérisé en ce que** les facteurs de multiplication $\cos \Delta\omega t$ et $\sin \Delta\omega t$ sont respectivement les échantillons d'une cosinusoïde et d'une sinusoïde à une pulsation $\Delta\omega$.

11. Appareil selon la revendication 8, **caractérisé en ce que** lesdits quatre signaux de produit ($I_{721}$, $I_{722}$, $Q_{723}$, $Q_{724}$), délivrés par les multiplicateurs respectifs ($M_{721}$, $M_{722}$, $M_{723}$, $M_{724}$), sont envoyés par paire aux quatre additionneurs ($A_{731}$, $A_{732}$, $A_{733}$, $A_{734}$) du module additionneur (730).

12. Appareil selon la revendication 8, **caractérisé en ce qu'**il comprend un filtre passe-bas (F1, F2, F3, F4) associé à chaque composante de signal ($I_{1113}$, $Q_{1113}$, $I_{1123}$, $Q_{1123}$) délivrée par le circuit de traitement, pouvant sélectionner une composante respective de signal de bande de base ($I_{113}/Q_{113}$, $I_{123}/Q_{123}$).

13. Appareil selon la revendication 12, **caractérisé en ce qu'**il comprend un circuit de bande de base (921, 922) associé à chaque paire de signaux de bande de base, pouvant recombiner et sérialiser les signaux d'entrée de façon à reconstruire les flux numériques de source ($D_{112}$, $D_{112}$) transmis par le biais d'un relais radio.

14. Appareil selon la revendication 8, **caractérisé en ce que** ledit démodulateur QAM (600) est analogique.

15. Appareil selon la revendication 14, **caractérisé en ce qu'**il comprend deux convertisseurs de numérique en analogique (A/D) (620, 630) disposés en aval du démodulateur QAM (600), chaque convertisseur recevant, au niveau de son entrée, une composante de signal associée ($I_{601}$, $Q_{601}$) délivrée par le démodulateur (600) lui-même.

16. Appareil selon la revendication 8, **caractérisé en ce que** ledit démodulateur QAM (1600) est numérique.

17. Appareil selon la revendication 8, **caractérisé en ce qu'**il comprend un convertisseur d'analogique en numérique (A/D) (1620) disposé en amont du démodulateur (1600).

Fig. 1

Fig. 2

Fig. 3

Fig. 4

**EP 2 239 915 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007030916 A

- US 5638401 A